Europäisches Patentamt

European Patent Office

Office européen des brevets

(19)

(11) Veröffentlichungsnummer : **0 134 010 B1**

# (12) EUROPÄISCHE PATENTSCHRIFT

(45) Veröffentlichungstag der Patentschrift :
27.05.87

(21) Anmeldenummer : **84109324.8**

(22) Anmeldetag : **06.08.84**

(51) Int. Cl.⁴ : **H 04 M 3/36, H 04 Q 3/54**

(54) Schaltungsanordnung für Fernmeldeanlagen, insbesondere Fernsprechvermittlungsanlagen, mit zentralen und/oder teilzentralen informationsverarbeitenden Schaltwerken.

(30) Priorität : **08.08.83 DE 3328572**

(43) Veröffentlichungstag der Anmeldung :
**13.03.85 Patentblatt 85/11**

(45) Bekanntmachung des Hinweises auf die Patenterteilung : **27.05.87 Patentblatt 87/22**

(84) Benannte Vertragsstaaten :
**AT CH DE FR GB IT LI NL SE**

(56) Entgegenhaltungen :
**CH-A- 543 209**
**9th INTERNATIONAL TELETRAFFIC CONGRESS (ITC-9), Oktober 1979, Seiten 1-7, Torremolinos, ES; P. SOMOZA u.a.: " "Dynamic processor overload control" and its implementation in certain single-processor and multiprocessor SPC systems"**
**NEC RESEARCH & DEVELOPMENT, Heft 55, Oktober 1979, Seiten 95-101, Tokyo, JP; A. KITAMURA u.a.: "Operation and maintenance features of NEAX 61 digital switching system"**

(73) Patentinhaber : **Siemens Aktiengesellschaft Berlin und München**
**Wittelsbacherplatz 2**
**D-8000 München 2 (DE)**

(72) Erfinder : **Laas, Kurt**
**Brehmstrasse 3**
**D-8000 München 90 (DE)**

**Beschreibung**

Schaltungsanordnung für Fernmeldevermittlungsanlagen, insbesondere Fernsprechvermittlungsanlagen, mit zentralen und dezentralen informationsverarbeitenden Schaltwerken, die eine hinsichtlich der Informationsverarbeitungskapazität begrenzte Leistungsfähigkeit aufweisen, und mit einem zentralen Koppelfeld und mit dezentralen Anschlußgruppen, denen jeweils ein dezentrales Schaltwerk zugeordnet ist, und an die Teilnehmeranschlußleitungen, Verbindungsleitungen, z. B. Orts- und Fernverbindungsleitungen, und verbindungsindividuelle Schalteinrichtungen, z. B. Verbindungssätze und Wahlempfangseinrichtungen, angeschlossen sind, und die mit dem zentralen Schaltwerk in einem der Abwicklung der einzelnen Vermittlungsvorgänge dienenden Austausch von Daten, z. B. von Wahlinformationen und Steuer- und Einstellinformationen, stehen, und mit Meßeinrichtungen zur Bestimmung eines Abweichens der akuten Informationsverarbeitungs-Arbeitsbelastung eines zentralen Schaltwerkes von seiner Leistungsfähigkeit, insbesondere zur Erkennung von Informationsverarbeitungs-Verkehrsüberlastungen und zur Abwehr solcher Überlastungen, und mit peripheren Schalteinrichtungen, in denen die Menge der einfallenden Informationsverarbeitungs-Aufträge reduziert wird, indem ein bestimmter Prozentsatz dieser Aufträge abgewiesen wird, und mit Übertragungsschaltmitteln zur Meldung von Daten über das Abweichen der akuten Informationsverarbeitungs-Arbeitsbelastung bezüglich der Leistungsfähigkeit eines zentralen Schaltwerks zu den dezentralen Schaltwerken.

Eine Schaltungsanordnung dieser Art ist bereits durch die Zeitschrift « IEEE Transactions on Communications » September 1973, Seite 1027 ff bekannt. Die Tatsache der Erfassung der akuten Informationsverarbeitungs-Arbeitsbelastung eines zentralen Schaltwerkes durch eine entsprechende Meßeinrichtung an zentraler Stelle schafft eine günstige Voraussetzung dafür, daß durch diese Erfassung einerseits die Abwehr von Informationsverarbeitungs-Überbelastungen an dezentraler Stelle, also bereits am Ort der Entstehung solcher Überbelastungen, initiiert werden kann, andererseits aber vermieden werden kann, daß durch entsprechende Abwehrmaßnahmen an dezentraler Stelle Informationsverarbeitungs-Verkehrsleistung bleiben kann, was einer Vergeudung an Arbeitsleistung und somit an geleistetem Aufwand von bzw. für entsprechende zentrale Prozessoren gleichkommen würde. In einer Schaltungsanordnung der eingangs angegebenen Art findet nun für die laufende Abwicklung der Vermittlungsvorgänge einschließlich der entsprechenden Steuervorgänge für die Durchschaltung von Koppelfeldverbindungen ein beständiger Datenaustausch zwischen dem zentralen Schaltwerk einerseits und den dezentralen Schaltwerken andererseits statt. Dieser Datenaustausch ist umso intensiver, je stärker der momentane Vermittlungsverkehr ist. Für die Erfindung besteht die Aufgabe, den zur Reduzierung der Informationsverarbeitungs-Arbeitsbelastung eines zentralen Schaltwerkes abzuwickelnden Datenverkehr (Übertragung entsprechender Daten vom zentralen Schaltwerk zu den dezentralen Schaltwerken) so zu gestalten, daß die entsprechenden Datenwege in der Betriebssituation besonders hoher Verkehrsbelastung nicht noch eine zusätzliche Verkehrsbelastung durch die Übertragung dieser mit großer Dringlichkeit weiterzuleitenden Daten erfahren. Dabei soll die Übertragung dieser Daten mit Vorrang zu denjenigen dezentralen Schaltwerken erfolgen, von denen die stärkste Informationsverarbeitungs-Verkehrsbelastung herkommt.

Die Erfindung löst die gestellte Aufgabe dadurch, daß in den dezentralen Schaltwerken ein Prozentsatz abzuweisender Aufträge gespeichert ist, daß in den dezentralen Schaltwerken für die Speicherung des Prozentsatzes vorgesehene Speicherschaltmittel bei Eintreffen von eine zulässige Belastungs-Erhöhung bzw. eine erforderliche Belastungs-Herabsetzung gegenüber der momentan herrschenden Belastung des zentralen Schaltwerkes signalisierenden Daten schrittweise mit vorbestimmter Schrittweite den gespeicherten Prozentsatz verringern bzw. vergrößern, und daß diese Daten gemeinsam mit den der Abwicklung der Vermittlungsvorgänge vom zentralen Schaltwerk zu den dezentralen Schaltwerken übertragenen Daten, insbesondere mit den Einstell- und Steuerinformationen, vom zentralen Schaltwerk zu den dezentralen Schaltwerken und in diesen zu den Speicherschaltmitteln übertragen werden.

Die Erfindung ermöglicht es, durch die gemeinsame Übertragung der der Meldung der Erhöhung bzw. Herabsetzung der Leistungsfähigkeit dienenden Daten mit den der Abwicklung der Vermittlungsvorgänge dienenden Daten, die Daten der an erster Stelle genannten Art, d. h. diejenigen Daten, welche eine Abwehr von Verkehrsleistungs-Überlastungen bewirken, besonders schnell zu denjenigen dezentralen Schaltwerken hin zu transportieren, die in einem besonders regen Datenaustausch mit dem zentralen Schaltwerk stehen. Dadurch, daß der erwähnte Prozentsatz in den dezentralen Schaltwerken gespeichert ist, ist es während der gesamten Dauer einer Lastabwehrphase nicht erforderlich, Daten zu übertragen, die die Informationsverarbeitungs-Verkehrsüberlastung betreffen.

Gemäß der Erfindung ist vorgesehen, daß die Daten, die die Erhöhung oder Herabsetzung der Leistungsfähigkeit des zentralen Schaltwerkes betreffen, lediglich eine Erhöhung oder Herabsetzung des gespeicherten Prozentsatzes signalisieren. Danach müssen also zu den dezentralen Schaltwerken nicht mehr Daten übertragen werden, die den jeweiligen neu zu berücksichtigenden Prozentsatz angeben, sondern lediglich Daten, welche aussagen, daß der jeweilige bisherige Prozentsatz zu erhöhen bzw. herabzusetzen ist. Dadurch wird das für diese Daten erforderliche Datenspektrum wesentlich verkleinert. In diesem Zusammenhang ist es zweckmäßig, den genannten Prozentsatz gestuft zu erhöhen oder herabzusezen.

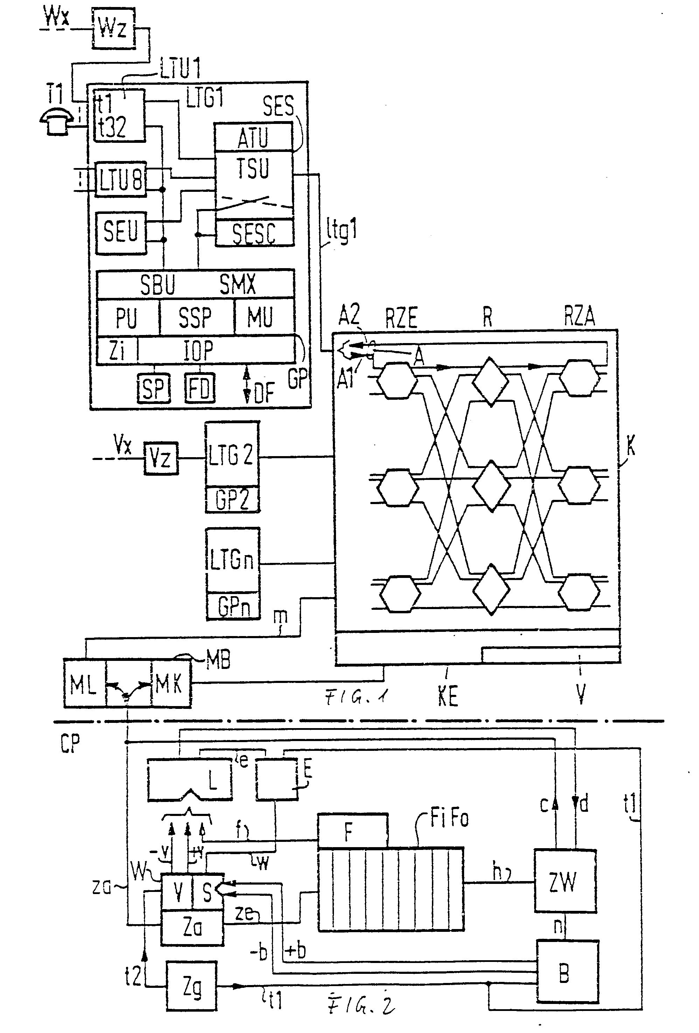

In Fig. 1 und 2 der Zeichnungen ist ein Ausführungsbeispiel der Erfindung nur in wesentlich zu ihrem Verständnis beitragenden Bestandteilen dargestellt. Die Beschreibung geht zunächst auf die allgemeinen Funktionsabläufe einer erfindungsgemäß arbeitenden PCM-Fernsprechvermittlungsanlage nach Fig. 1 ein. Erst weiter unten werden die erfindungsgemäßen Besonderheiten dieser Vermittlungsanlage zusätzlich anhand von Fig. 2 erläutert.

Ein in drei Koppelstufen RZE, R und RZA aufgebautes Koppelfeld weist eingangsseitig eine größere Anzahl von Koppelfeldanschlüssen auf, von denen einer dargestellt und mit A bezeichnet ist. Das Koppelfeld besteht aus mehreren Koppelfeldteilen. Jeder der Koppelfeldanschlüsse umfaßt immer ein Paar von Zeitmultiplexleitungen, von denen die eine Zeitmultiplexleitung zur Signalübertragung zum Koppelfeld hin und die andere Zeitmultiplexleitung zur Signalübertragung aus dem Koppelfeld heraus dient. Dementsprechend umfaßt der Koppelfeldanschluß A eine Zeitmultiplexleitung A1 und eine Zeitmultiplexleitung A2. Für jede dieser beiden Zeitmultiplexleitungen ist die jeweilige Signalübertragungsrichtung durch entsprechende Pfeile angedeutet.

Die Koppelvielfache der ersten Koppelstufe RZE sind kombinierte Zeitlagen-Raumlagen-Vielfache, wie die dargestellten Symbole erkennen lassen. Die Koppelvielfache der mittleren Koppelstufe R sind Raumlagenvielfache. Die Koppelvielfache der letzten Koppelstufe RZA sind wieder Raumlagen-Zeitlagen-Vielfache. In jeder Koppelstufe ist eine größere Anzahl der angegebenen Vielfache vorgesehen, wenngleich pro Koppelstufe jeweils nur drei Vielfache der angegebenen Art dargestellt sind. Die Koppelvielfache der verschiedenen Koppelstufen sind untereinander über Zwischenleitungen in der aus der Zeichnung ersichtlichen Weise verbunden. Diese Zwischenleitungen sind Zeitmultiplex-Zwischenleitungen. Ebenso sind die Koppelfeldanschlüsse zeitmultiplexer Art.

An die Koppelfeldanschlüsse, z. B. A des Koppelfeldteiles K, sind über für jeweils beide Nachrichtenübertragungsrichtungen ausgelegte Zeitmultiplexleitungen, z. B. die Zeitmultiplexleitung ltg1, Anschlußgruppen, z. B. die Anschlußgruppe LTG1 (Line Trunk Group), einzeln angeschlossen. Eine solche Anschlußgruppe ist eingangsseitig mit Teilnehmerleitungen (analog), Analog-Verbindungsleitungen und mit PCM-Verbindungsleitungen (alternativ sowie auch in Kombination) beschaltbar. Eine über eine Teilnehmerleitung angeschlossene Teilnehmerstation ist mit T1 bezeichnet. In einer Anschlußgruppe sind Codierer, Decodierer, Multiplexer, Demultiplexer und die für eine Realisierung der sogenannten BORSCHT-Funktionen erforderlichen Einrichtungen enthalten (vgl. NTZ Bd. 33/ 1980, Heft 10, Seiten 646 bis 652 und 1978 International Zurich Seminar on Digital Communications, Proceedings IEEE Catalogue, Nr. 78 CH 1325-0 ASST, Seiten B2-1, A4.1, auch die deutschen Patentanmeldungen P 31 00 811.9/VPA 81 P 6201 ; P 31 04 002.0/ VPA 81 P 6203 und P 31 06 903.7/ VPA 81 P 6209).

In der Zeichnung ist unter anderem die Anschlußgruppe LTG1 gezeigt. Deren Aufbau und Arbeitsweise sind ausführlich in der DT-OS-28 26 113 ab Seite 6 unten beschrieben. Ferner sei auf das Beiheft zum 4. Jahrgang (1981) der Zeitschrift « telcom report » hingewiesen. Die weiteren Erläuterungen setzen diese Beschreibungen als bekannt voraus und beschränken sich auf die im vorliegenden Falle besonders wesentlichen Zusammenhänge.

Ein zentrales Steuerwerk ZW dient unter anderem zur Herstellung der über das Koppelfeld aufzubauenden Nachrichtenverbindungen. Es ermittelt die für die Herstellung einer jeden Verbindung erforderlichen Vermittlungsdaten. Die Vermittlungsdaten für eine durchzuschaltende Verbindung geben bekanntlich genau den Verlauf der betreffenden Verbindung über das Koppelfeld an, also die von der Verbindung durchlaufenen Koppelvielfache und Zwischenleitungen, sowie die darin jeweils belegten Kanäle. Diese Vermittlungsdaten werden mit Hilfe des Zentralsteuerwerkes, das also u. a. auch die Funktion einer Wegesucheinrichtung nebst Belegungsspeicher ausübt, erarbeitet und zur Koppelfeldeinstelleinrichtung KE des Koppelfeldes K übertragen. Der die Vermittlungsdaten übertragende Datenfluss vom Zentralsteuerwerk ZW zur Koppelfeldeinstelleinrichtung KE verläuft über eine mit dem Zentralsteuerwerk über eine zentrale Datenleitung D verbundene Puffereinrichtung MB, die einer Zwischenspeicherung und Umcodierung von Daten sowie einer Anpassung der Übertragungsgeschwindigkeiten dient. Die Puffereinrichtung kann auf einen Teil dieser Funktionen oder auf jeweils nur eine dieser Funktionen beschränkt sein. Eine solche Puffereinrichtung ist z. B. in der DE-PS-15 37 849 (VPA 67/3047) ausführlich beschrieben.

Außer dem zentralen Steuerwerk ZW ist eine größere Anzahl von dezentralen Steuereinrichtungen GP1 bis GPn dargestellt, die jeweils den Anschlußgruppen LTG1 bis LTGn individuell zugeordnet sind. Diese Steuereinrichtungen dienen zur Durchführung sämtlicher Schaltvorgänge innerhalb jeder der genannten Anschlußgruppen. Zu diesen Schaltvorgängen gehören insbesondere sämtliche Vermittlungsvorgänge innerhalb dieser Anschlußgruppen. Weitere Einzelheiten hierüber können der bereits angegebenen DE-OS-28 26 113 entnommen werden.

Die dezentralen Steuereinrichtungen GP1 bis GPn stehen mit dem zentralen Steuerwerk ZW über Datenkanäle in Verbindung, die einzeln pro dezentrale Steuereinrichtung über das Koppelfeld (K) bis zur Puffereinrichtung MB durchgeschaltet sind. Von dieser Puffereinrichtung, und zwar von ihrem Datenkopf ML, führt also je ein eigener Datenkanal zu jeder der dezentralen Steuereinrichtungen. Hierzu ist die Puffereinrichtung MB mit ihrem Datenkopf ML über eine Zeitmultiplexleitung m an einen der Koppelfeldanschlüsse angeschlossen. Die Puffereinrichtung ist an einen der Koppelfeldanschlüsse des Koppelfeldes in der gleichen Weise angeschlossen, wie jede der genannten Anschlußgruppen LTG1 bis LTGn. Die Zeitmultiplexleitung m ist also an einen Koppelfeldanschluß angeschaltet, der einen Zeitmultiplexeingang zu einem Raumlagen-Zeitlagen-Vielfach der ersten Koppelstufe und einen Zeitmultiplexausgang von einem Raumlagen-Zeitlagen-Vielfach der letzten Koppelstufe umfaßt. Die Zeitmultiplexeinrichtung m ist also an einen Koppelfeldanschluß wie den mit A bezeichneten angeschaltet.

Jede Datenverbindung zwischen dem Datenkopf einer Puffereinrichtung und einer jeden der Anschlußgruppen, z. B. der Anschlußgruppe LTG1, umfaßt einen Kanal zur Übertragung von Daten von der Puffereinrichtung zur betreffenden Anschlußgruppe und einen weiteren Kanal zur Übertragung von Daten in der umgekehrten Richtung. Diese beiden Datenkanäle führen zu und von der der betreffenden Anschlußgruppe individuell zugeordneten dezentralen Steuereinrichtung.

Die Herstellung und die Aufrechterhaltung der erläuterten Datenverbindungen über das Koppelfeld erfolgt mit Hilfe der Koppelfeldeinstelleinrichtung KE in der gleichen Weise wie die Herstellung und die Aufrechterhaltung von Nachrichtenverbindungen, z. B. Fernsprechverbindungen. Hierzu sind in an sich bekannter Weise den Koppelvielfachen des Koppelfeldes K Haltespeicher zugeordnet, in die jeweils ein Koppelvielfach betreffenden Vermittlungsdaten eingespeichert werden. Mit Hilfe dieser Haltespeicher wird bewerkstelligt, daß in den jeweiligen Zeitlagen die erforderlichen Durchschaltungen zur Verfügung stehen bzw. die erforderlichen Schreibvorgänge sowie Lesevorgänge für die Vollspeicher der Zeitlagenvielfache stattfinden. Alle weiteren Einzelheiten, die Aufbau und Arbeitsweise einer Zeitmultiplexkoppelanordnung betreffen, werden hier als bekannt vorausgesetzt und deshalb nicht weiter im einzelnen beschrieben.

Wie erläutert, werden die zur Herstellung von Nachrichtenverbindungen erforderlichen Vermittlungsdaten vom Zentralsteuerwerk über die Puffereinrichtung MB zur Koppelfeldeinstelleinrichtung KE übertragen. Hierzu dient u. a. ein Datenkopf MK, der der Puffereinrichtung MB zugeordnet ist. Der Vollständigkeit halber sei an dieser Stelle hinzugefügt, daß mit einer Puffereinrichtung MB auch eine Mehrzahl von Koppelfeldeinstelleinrichtungen KE verbunden sein kann. Diese mehreren Koppelfeldeinstelleinrichtungen können einzeln mehreren Koppelfeldteilen eines größeren Koppelfeldes zugeordnet sein. Es ist auch möglich, je eine Koppelfeldeinstelleinrichtung pro Koppelstufe vorzusehen.

Da die weiter oben beschriebenen Datenverbindungen zwischen der Puffereinrichtung MB über die Zeitmultiplexleitung m zu jeder der Anschlußgruppen LTG1 bis LTGn mit Hilfe des Koppelfeldes K durchgeschaltet sein müssen, bevor der Aufbau von Nachrichtenverbindungen, z. B. Fernsprechverbindungen, begonnen werden kann, steht für die Herstellung dieser Datenverbindungen in der Regel ein völlig freies Koppelfeld zur Verfügung, also ein Koppelfeld, in dem sämtliche Kanäle unbelegt sind. Deshalb kann der Aufbau der Datenverbindungen nach einem willkürlich festgelegten Schema erfolgen, das für alle Zeiten unverändert bleibt. Deshalb ist vorgesehen, daß die Koppelfeldeinstelleinrichtung KE außerdem in einem ihr zugeordneten Speicher V Einstelldaten, d. h. also die Vermittlungsdaten, für die Datenkanäle gespeichert enthält. Diese Vermittlungsdaten brauchen also bei einem Neuaufbau der Datenverbindungen nicht jeweils vom zentralen Steuerwerk ZW neu erarbeitet zu werden und nicht über die Puffereinrichtung MB erneut übertragen zu werden. Sind die zwischen der Puffereinrichtung MB und den Anschlußgruppen LTG1 bis LTGn, d. h. ihren dezentralen Steuereinrichtungen GP1 bis GPn, erforderlichen Datenverbindungen über das Koppelfeld K neu herzustellen, so gibt das zentrale Steuerwerk ZW lediglich einen entsprechenden Befehl an die Puffereinrichtung MB ab, den sie an die Koppelfeldeinstelleinrichtung KE weitergibt, und aufgrund deren diese die in ihrem Speicher V gespeicherten Vermittlungsdaten entnimmt, um in an sich bekannter Weise die erforderlichen Vermittlungsvorgänge einzeln nacheinander auszuführen.

Wie in der bereits genannten DE-OS-2 826 113 erläutert ist, werden über den Zeitkanalkoppler TSU der Anschlußgruppe LTG1 außer Nachrichtenverbindungen von und zu Teilnehmerstellen sowie Verbindungsleitungen auch die bereits erwähnten Datenverbindungen zwischen den den Anschlußgruppen, z. B. LTG1, zugeordneten dezentralen Steuereinrichtungen, z. B. GP, einerseits und dem zentralen Steuerwerk ZW andererseits hergestellt. Diese Datenverbindungen verlaufen, wie bereits dargelegt, weiterhin über das Koppelfeld K und die Zeitmultiplexleitung m.

Wie bereits ausgeführt wurde, sind die Gruppensteuerwerke GP1 bis GPn dezentrale oder teilzentrale Steuereinrichtungen im Vergleich zum zentralen Steuerwerk ZW. Insgesamt werden diese teilzentralen Steuerwerke und das zentrale Steuerwerk auch als Schaltwerke bezeichnet. Die Gruppensteuerwerke und das zentrale Steuerwerk weisen eine hinsichtlich der Informationskapazität begrenzte Leistungsfähigkeit auf. Ein besonderes Problem stellt die Leistungsfähigkeit des zentralen Steuerwerkes dar.

Wie ebenfalls bereits angedeutet wurde, ist außer dem zentralen Koppelfeld K eine Anzahl von Anschlußgruppen LTG1 bis LTGn vorgesehen. Jede dieser Anschlußgruppen ist je über eine PCM-Leitung, z. B. ltg1, an einen Eingang des Koppelfeldes K in der beschriebenen Weise angeschlossen. Diese PCM-Leitung pro Anschlußgruppe führt innerhalb derselben zu einer Durchschalteeinrichtung TSU, deren Bedeutung und Funktionsweise in der bereits genannten deutschen Offenlegungsschrift 2 826 113 genauer beschrieben wird. Bei dieser Durchschalteanordnung handelt es sich um ein Teilkoppelfeld, über das sowohl die genannten Datenverbindungen als auch die Verbindungen von und zu Teilnehmern und von und zu Verbindungsleitungen durchgeschaltet werden. Unter « Verbindungsleitungen » sind selbstverständlich auch Kanäle von angeschlossenen PCM-Verbindungsleitungen zu verstehen. Der Anschluß dieser Teilnehmerleitungen, Verbindungsleitungen und Kanäle ist den bereits genannten Literaturstellen zu entnehmen.

Über eingangsseitig an eine Anschlußgruppe angeschlossene Teilnehmerleitungen, Verbindungsleitungen und Kanäle treffen verschiedenerlei Informationen ein, z. B. Anrufsignale von Teilnehmerstationen, die eine Verbindung herzustellen wünschen, ferner Wahlkennzeichen von diesen Teilnehmerstellen, aber auch über Verbindungsleitungen und Kanäle, ferner Leitungszeichen über Verbindungsleitungen sowie in Zuordnung zu Kanälen. Das Gruppensteuerwerk dient in an sich bekannter Weise zur Abwicklung der Aufnahme solcher eintreffender verbindungsindividueller Informationen. Ein Gruppensteuerwerk nimmt außerdem eine Verarbeitung oder eine Vorverarbeitung dieser aufgenommenen Informationen jeweils in Zuordnung zu der betreffenden Teilnehmerleitung, Verbindungsleitung oder zu dem betreffenden Kanal vor. Außerdem werden einige solcher Informationen in dem dem Gruppensteuerwerk jeweils individuell zugeordneten Speichern SP zwischengespeichert und zwar mit Hilfe einer Eingabe-Ausgabe-Einrichtung IOP. Ferner hat das Gruppensteuerwerk die Aufgabe, Signale und Steuersignale über diese Leitungen (Teilnehmerleitungen und Verbindungsleitungen, sowie Kanäle) zur Aussendung zu bringen, z. B. Rufwechselstromimpulse, Hörtonsignale, Wahlkennzeichen sowie Leitungszeichen und dergleichen.

Über das einer Anschlußgruppe zugehörige Teilkoppelfeld werden Verbindungen hinsichtlich der Verbindungsaufbaurichtung sowohl ankommend von einer Leitung (Teilnehmerleitung, Verbindungsleitung bzw. ein entsprechender Kanal) zum zentralen Koppelfeld K hin als auch von diesem abgehend zu einer solchen Leitung durchgeschaltet. Bei einer Verbindungsherstellung erfolgt zunächst eine Durchschaltung z. B. von einer Teilnehmerleitung über die betreffende Anschlußgruppe zum zentralen Koppelfeld K. Die für die weitere Durchschaltung der betreffenden Verbindung über dieses Koppelfeld erforderlichen Daten werden vom Gruppensteuerwerk über die betreffende, bereits erwähnte Datenverbindung zum Zentralsteuerwerk ZW übertragen. Die weitere Verbindungsdurchschaltung erfolgt über eine Anschlußgruppe (gegebenenfalls dieselbe Anschlußgruppe, in der Regel aber eine andere Anschlußgruppe) wozu das betreffende Gruppensteuerwerk der jeweiligen Anschlußgruppe tätig werden muß.

Für ein Gruppensteuerwerk gibt es also hinsichtlich der Verbindungsaufbaurichtung Durchschaltevorgänge verschiedener Art, und zwar einerseits Durchschaltungen von einer Teilnehmerleitung oder Verbindungsleitung (oder einem entsprechenden Kanal) zum Koppelfeld K hin und andererseits Durchschaltungen in umgekehrter Richtung. Die Durchschaltungen über ein Teilkoppelfeld unterscheiden sich außerdem in solche von und zu Teilnehmerleitungen einerseits und von und zu Verbindungsleitungen (bzw. Kanälen) andererseits. Die im Zusammenhang dieser jeweils beiden pro Verbindung erforderlichen Durchschaltevorgänge durchgeführten Informationsaufnahmevorgänge und/oder Informationsabgabevorgänge nehmen wenigstens je einmal pro Durchschaltevorgang das jeweilige Gruppensteuerwerk in Anspruch. Die jeweilige Art der Durchschaltung (ankommend oder abgehend von oder zu Teilnehmerleitung oder Verbindungsleitung) ist maßgebend für die mit der jeweiligen Inanspruchnahme des Gruppensteuerwerks zwangsläufig verbundene Informationsverarbeitungs-Verkehrsbelastung pro Durchschaltevorgang — wie bereits ausgeführt wurde, werden von den Gruppensteuerwerken die Informationen, die sie im Zusammenhang mit einem Durchschaltevorgang aufnehmen, unverändert oder vorverarbeitet an das ihnen gemeinsame zentrale Steuerwerk weitergeleitet. Ebenso gibt auch das zentrale Steuerwerk Informationen an die Gruppensteuerwerke aus, um darin erforderliche abgehende Durchschaltungen durchzuführen und Signale und Steuersignale über die betreffenden Leitungen (Teilnehmerleitungen und Verbindungsleitungen bzw. Kanäle) abzugeben. Die pro Verbindungsherstellung von einem Gruppensteuerwerk an das zentrale Steuerwerk zuübertragenden Informationen stellen also jeweils eine Informationsportion begrenzten Umfanges dar ; der jeweilige Umfang einer Informationsportion ergibt sich aus der jeweiligen Art der Verbindungsherstellung.

Jeder Anruf seitens einer Teilnehmerstelle und jede ankommende Belegung einer Verbindungsleitung (bzw. eines entsprechenden Kanales) erfordert also vom betreffenden Gruppensteuerwerk eine bestimmte Arbeitsleistung. Jede solche Arbeitsleistung wird anhand eines Initial-Schaltkennzeichens für das jeweilige Gruppensteuerwerk erkennbar. Ein solches Initial-Schaltkennzeichen ist bei einer Teilnehmerleitung mit Schleifenimpulsgabe z. B. der Schleifenschluß, der das Anrufsignal darstellt. Ein solches Initial-Schaltkennzeichen ist bei einer Verbindungsleitung z. B. das c-Ader-Belegungssignal bei ankommender Belegung. Entsprechendes gilt für verbindungsindividuelle Kanäle. Diese Initial-Schaltkennzeichen sind also voneinander verschieden, und zwar je nach der betreffenden Art von Leitung (Teilnehmerleitung oder Verbindungsleitung). Im Zusammenhang mit der Durchschaltung eines Teilabschnittes einer herzustellenden Verbindung signalisieren sie jeweils ein entsprechendes Maß an für das betreffende Gruppensteuerwerk zu erwartender Informationsverarbeitungs-Verkehrsbelastung, insbesondere in Verbindung mit Aufnahme, Verarbeitung und/oder Abgabe von Informationen. Für . die verschiedenen Teilabschnitte durchzuschaltender Verbindungen sind also bestimmte diesbezügliche Maße typisch, die bei gleichartigen Teilabschnitten einer durchzuschaltenden Verbindung gleich, bei den verschiedenen Teilabschnitten aber unterschiedlich sind. Was für jedes der Gruppensteuerwerke gilt, gilt in entsprechender Weise auch für das zentrale Steuerwerk ZW. Je nach dem, ob es sich bei einer über das Koppelfeld K durchzuführenden Durchschaltung um eine Internverbindung, eine abgehende Fernverbindung oder eine ankommende Fernverbindung handelt, ist das Ausmaß der Informationsverarbeitungs-Verkehrsbelastung pro Durchschaltung für das zentrale Steuerwerk verschieden groß, und zwar je nach Art der jeweils herzustellenden Verbindung.

Nachdem die bisherige Beschreibung die erfindungsgemäß gestaltete Zeitmultiplex-Fernsprechvermittlungsanlage grundlegend in allgemeineren Zusammenhängen beschrieben hat, wendet sie sich nunmehr den erfindungsgemäßen Zusammenhängen zu. Während die Beschreibung im bisherigen Teil sich auf die Bestandteile oberhalb der strichpunktierten Linie bezog, nimmt sie nunmehr überwiegend auf die unterhalb der strichpunktierten Linie dargestellten Bestandteile Bezug.

Das bereits erwähnte Zentralsteuerwerk ZW ist ein zentrales informationsverarbeitendes Schaltwerk. Die dezentralen Steuereinrichtungen GP1 bis GPn sind teilzentrale informationsverarbeitende Schaltwerke. Wie bereits erläutert wurde, findet der Datenaustausch zwischen den teilzentralen Schaltwerken GP1 bis GPn einerseits und dem zentralen Schaltwerk ZW andererseits über die Pufferspeicher MB statt. Informationen, die zum zentralen Schaltwerk hin zu übertragen sind, werden über die Leitungen za, ze und h weitergegeben. Informationen, die vom zentralen Schaltwerk ZW zu den teilzentralen Schaltwerken GP1 bis GPn abgegeben werden, werden über den Weg c übertragen.

Wie bereits erwähnt wurde, und wie ganz allgemein bekannt, weist das zentrale Schaltwerk hinsichtlich seiner Informations-Verarbeitungskapazität eine begrenzte Leistungsfähigkeit auf. Diese Leistungsfähigkeit betrifft die Anzahl von Informationsverarbeitungsvorgängen, die pro Zeiteinheit abgewickelt werden können. Die Belastbarkeit eines jeden zentralen Schaltwerkes hängt grundsätzlich von seinem Aufbau (Struktur und Programmabwicklung) und von der Art und dem Umfang der ihm laufend übertragenen Informationsverarbeitungsvorgänge ab. Diese sind in der Regel von unterschiedlicher Art. Sie treten gemischt auf ; die Belastbarkeit betrifft deshalb die jeweils gegebene Mischung von Informationsverarbeitungsaufträgen.

Die Erfahrung lehrt nun, daß die Zusammen-(setzung von Informationsverarbeitungsvorgängen verschiedener Art sich während des Betriebes eines zentralen Schaltwerkes verschieben kann. So kann es z. B. sein, daß zu bestimmten Tageszeiten überwiegend Ortsverbindungen herzustellen sind, während zu bestimmten anderen Tageszeiten überwiegend Fernverbindungen herzustellen sind. Ferner kann es sein, daß zu bestimmten Tageszeiten mehr Kurzzeitgespräche stattfinden und zu anderen Tageszeiten mehr. Langzeitgespräche. Ferner kann es sein, daß zu bestimmten Tageszeiten mehr Sonderdienste in Anspruch genommen werden als zu anderen Tageszeiten. Darüber hinaus kann der Anteil von jeweils vor vollständiger Verbindungsherstellung abgebrochenen Verbindungsherstellungsversuchen an der Gesamtheit der Verbindungsherstellungsvorgänge zu bestimmten Tageszeiten größer sein als zu bestimmten anderen Tageszeiten.

Aus den verschiedenen zuvor angegebenen Gründen ist die Belastbarkeit eines zentralen Schaltwerks nicht konstant. Um ein zentrales Schaltwerk optimal auszulasten, ist es deshalb zweckmäßig, die zu den verschiedenen Betriebszeiten aufgrund der unterschiedlichen Voraussetzungen gegebenen unterschiedlichen Belastbarkeiten zu berücksichtigen. Deshalb ist es gebräuchlich, solche Steuerwerke mit Meßeinrichtungen zur Bestimmung der Belastbarkeit auszustatten, die die stets schwankende Belastung über Zeiträume integrieren, die jeweils groß genug sind, um ein Bestimmungsergebnis mit ausreichender Ergebnisgenauigkeit zu gewährleisten, wobei also Kurzzeitschwankungen nicht zum Tragen kommen. Eine solche Meßeinrichtung kann z. B. auf der Basis arbeiten, daß ein zentrales Steuerwerk bei jeweiliger Abarbeitung sämtlicher vorliegender Informationsverarbeitungsaufträge ein Anforderungssignal erzeugt, das u. a. dieser Meßeinrichtung zugeführt wird.

Diese Meßeinrichtung zählt nun über bestimmte Zeiträume gleicher Größe hinweg, z. B. über vier Sekunden hinweg, die Anzahl solcher aufgetretener Anforderungssignale im zentralen Schaltwerk. In der Zeichnung ist eine dem zentralen Schaltwerk ZW zugeordnete und mit ihm über eine Leitung n verbundene Meßeinrichtung B dargestellt. Vom zentralen Schaltwerk erhält sie also über diese Leitung n das Anforderungssignal bei seinem jedesmaligen Auftreten. Die Meßeinrichtung B zählt in an sich bekannter Weise die Anforderungssignale ab. Von einer zentralen Zeitgebereinrichtung Zg erhält sie im Abstand von 4 Sekunden ein Zeitmarkierungssignal über die Leitung t1. Dieses Zeitmarkierungssignal bedeutet für einen Meßzeitraum das Ende und zugleich den Beginn für den jeweils nächstfolgenden Meßzeitraum. Die Meßeinrichtung B ermittelt nun die Anzahl der zwischen zwei solchen Zeitmarkierungen eintreffenden Anforderungssignale des jeweiligen zentralen Schaltwerks.

In der Meßeinrichtung B ist nun ein Normalwert für die Belastbarkeit gespeichert. Dieser Normalwert ist rechnerisch ermittelt und oder stellt ein Mittel über lange Zeiträume dar, die Belastbarkeitsunterschiede erfassen, die in der gesamten Betriebszeit eines zentralen Schaltwerks überhaupt auftreten können. Die Meßeinrichtung B empfängt nun also über die Leitung n innerhalb jedes Meßzeitraums Anforderungssignale des zentralen Schaltwerks ZW. Diese Anforderungssignale gibt das zentrale Schaltwerk immer dann ab, wenn für dasselbe keine Informationsverarbeitungsaufträge vorliegen. Liegen längere Zeit keine Informationsverarbeitungsaufträge vor, so werden diese Anforderungssignale in Zeitabständen abgegeben, die jeweils einem Informationsverarbeitungsvorgang im Mittel entsprechen.

Es ist auch möglich, anstelle von oder zusätzlich zu diesen Anforderungssignalen drittrangige Informationsverarbeitungsvorgänge vom zentralen Schaltwerk ZW zur Meßeinrichtung B hin zu melden, also diese drittrangigen Informationsverarbeitungsvorgänge einer Ermittlung der Belastbarkeit zugrunde zu legen. Solche drittrangigen Informationsverarbeitungsvorgänge können z. B. interne Prüfprogrammabläufe oder dergleichen sein.

Die Meßeinrichtung B zählt nun also jeweils innerhalb eines Meßzeitraumes die erhaltenen Anforderungssignale. Der in ihr gespeicherte Belastbarkeitsnormalwert gibt die Anzahl von Informationsverarbeitungsvorgängen an, die — langfristig gesehen — von einem zentralen Schaltwerk der jeweiligen Art abgewickelt werden. Dieser Belastbarkeitsnormalwert ist ein empirisch. und/oder rechnerisch ermittelter Konstantwert, der in der Meßeinrichtung B permanent gespeichert ist. Die Meßeinrichtung B subtrahiert nun von diesem Belastbarkeitsnormalwert die Anzahl der pro Meßzeitraum erhaltenen Anforderungssignale und dividiert die sich hierbei ergebende Differenz wiederum durch den Belastbarkeitsnormalwert. Ergibt sich hierbei der Wert 1, so ist hieran erkennbar, daß das zentrale Schaltwerk ZW in dem jeweiligen Meßzeitraum pausenlos mit Informationsverarbeitungsvorgängen beschäftigt war. Darin liegt ein Indiz dafür, daß das zentrale Schaltwerk in dem betreffenden Meßzeitraum zu hoch belastet war. Das zentrale Schaltwerk soll im allgemeinen nur zu 95 % ausgelastet sein. Ergibt der erwähnte Divisionsvorgang den Wert von 0,95, so ergibt sich daraus, daß das zentrale Schaltwerk in der erwünschten Weise zu 95 % ausgelastet war. Ergibt sich jedoch ein niedrigerer Wert, z. B. von 0,93, so ist hieran erkennbar, daß das zentrale Schaltwerk nur zu 93 % in dem betreffenden Meßzeitraum ausgelastet war, also zu niedrig.

Je nach dem erhaltenen Ergebnis aus dem betreffenden Divisionsvorgang pro Meßzeitraum gibt die Meßeinrichtung B entweder überhaupt kein Signal zu einem Belastungszähler W hin ab, oder sie gibt bei zu niedriger — bzw. zu höher — Belastung des zentralen Schaltwerks (wenn also die Soll-Belastbarkeit von 95 % höher — bzw. niedriger — als die zur Zeit tatsächlich vorliegende Belastung des zentralen Schaltwerks ist), ein Steigerungssignal über den Weg + b — bzw. ein Minderungssignal über den Weg — b.

Die Meßeinrichtung B liefert also einen Belastbarkeitswert, wobei Belastungsschwankungen im Sekundenbereich nicht erfaßt, sondern vielmehr nivelliert werden. Diese Belastbarkeitsmessung erfaßt lediglich die Schwankungen der Belastbarkeit, die sich relativ geringfügig und aus der tageszeitlich sich ändernden Betriebssituation ergibt.

Wie zuvor ausgeführt wurde, wird das Steigerungssignal — bzw. das Minderungssignal — von der Meßeinrichtung B dem Belastungszähler W zugeführt. Diesen Belastungszähler durchlaufen sämtliche Informationsverarbeitungsaufträge, die über die Leitung za eintreffen und über die Leitung ze weitergegeben werden. Bei diesen Informationsverarbeitungsaufträgen handelt es sich teilweise um Initialaufträge und teilweise um Nachfolgeaufträge. Die zur Herstellung einer Verbindung von einem rufenden Teilnehmer abgegebenen Schaltkennzeichen bestehen aus einem Initial-Schaltkennzeichen an erster Stelle (Anrufsignal) und aus Nachfolge-Schaltkennzeichen, die in Zeitabständen, die durch die Art und Weise des jeweils rufenden Teilnehmers bedingt sind, eintreffen. Im Zusammenhang mit jeweils einer Verbindungsherstellung gehören also immer ein Initial-Schaltkennzeichen und eine Anzahl von Nachfolge-Schaltkennzeichen zusammen. Nachfolge-Schaltkennzeichen können darüber hinaus jeweils im Zusammenhang mit einer Verbindungsherstellung das Wahlendekennzeichen, das Meldekennzeichen, das Endekennzeichen und dergleichen sein, also Leitungskennzeichen, sowie Gebührenzählimpulse. Diese Schaltkennzeichen werden mit Hilfe eines dezentralen Schaltwerks (teilzentrales Schaltwerk) GP aufgenommen. Aus ihnen ergeben sich Informationsverarbeitungsaufträge, die gemäß der Unterscheidung der Schaltkennzeichen in Initial-Schaltkennzeichen und Nachfolge-Schaltkennzeichen ebenfalls zu unterscheiden sind, und zwar in Initialaufträge und Nachfolgeaufträge. Über die Leitung za treffen nun sukzessive nacheinander Informationsverarbeitungsaufträge ein. Diese bestehen zu einem kleineren Teil aus Initialaufträgen und zu einem größeren Teil aus Nachfolgeaufträgen. Diese Informationsverarbeitungsaufträge treffen bezüglich der verschiedenen Verbindungsherstellungsvorgänge ungeordnet, d. h. also gemischt ein. Sie durchlaufen den Belastungszähler W und werden in einem FiFo-Speicher gespeichert. Dieser FiFo-Speicher weist in bekannter Weise eine größere Anzahl von Speichereinheiten auf, wobei jeweils eine Speichereinheit zur Speicherung eines Informationsverarbeitungsauftrages dient. In der gleichen Reihenfolge, wie die Informationsverarbeitungsaufträge über die Leitung ze zum FiFo-Speicher gegeben werden, werden sie auf Abruf vom zentralen Schaltwerk ZW über die Leitung h vom FiFo-Speicher zum zentralen Schaltwerk weitergegeben.

Der Belastungszähler W dient nun als eine weitere Meßeinrichtung zur Bestimmung eines Abweichens der akuten Informationsverarbeitungs-Arbeitsbelastung des zentral en Schaltwerks von seiner Leistungsfähigkeit. Der Belastungszähler W, der von sämtlichen Informationsverarbeitungsaufträgen durchlaufen wird, zählt von diesen lediglich die Initialaufträge.

Für die zuletzt erwähnte Zählung bestehen zwei Möglichkeiten. Die eine Möglichkeit besteht darin, daß eine zum Beispiel jede Sekunde über die Leitung t2 zum Belastungszähler übertragene Zeitmarkierung in dem Belastungszähler W jeweils einen Zählvorgang startet bzw. stopt, und daß ein zwischen je zwei Zeitmarkierungen gewonnenes Zählergebnis mit einem Vergleichswert verglichen wird. Die andere Möglichkeit besteht darin, daß ein Zähler durch die Initialaufträge vorwärtsgeschaltet wird und in gleichmäßigen Zeitabständen unabhängig von den Initialaufträgen rückwärtsgeschaltet wird, und daß ein Vergleichswert in der Anzahl von Rückwärtsschaltvorgängen besteht, die jeweils zwischen zwei in gleicher Weise wie in den zuvor angegebenen Zeitmarkierungen ausgeführt werden.

Es ist also für Initialaufträge (Initial-Schaltkennzeichen) und Nachfolgeaufträge (Nachfolge-Schaltkennzeichen) ein gemeinsamer FiFo-Speicher vorgesehen ; der Belastungszähler W selektiert von den dem FiFo-Speicher zugeführten Informationsverarbeitungsaufträgen (Schaltkennzeichen) die Initialaufträge, um den Zählvorgang nur auf diese zu beschränken. Wie ausgeführt, führt der Belastungszähler W die Zählung in aufeinanderfolgenden Zählzeitintervallen durch, die durch die genannten Zeitmarkierungen begrenzt sind ; er wird jeweils nach Ablauf eines Zählzeitintervalles durch die Zeitmarkierung in seiner Ausgangsposition zurückgestellt und liefert ein am Ende eines jeden Zählzeitintervalles mit einem Vergleichswert zu vergleichendes Zählergebnis. Dieser Vergleichswert stellt einen Schwellenwert dar. Die andere Möglichkeit besteht darin, daß der Belastungszähler W durch die Initialaufträge vorwärtsgeschaltet und kontinuierlich schrittweise zurückgestellt wird. In diesem Falle hält der Belastungszähler also jederzeit ein Zählergebnis bereit, das einem andauernden, wenigstens aber einmal pro Vorwärtszählvorgang und/oder pro Rückstellvorgang anhand eines Schwellenwertes durchgeführten Vergleichsvorgang unterworfen wird. — In beiden Fällen der speziellen Ausbildung des Belastungszählers W wird aufgrund einer Überschreitung des Schwellenwertes die Zufuhr von Initialaufträgen (Initial-Schaltkennzeichen) zum FiFo-Speicher gedrosselt, wodurch eine Annahme aller auch jeweils zu einem Initialauftrag (Initial-Schaltkennzeichen) gehörenden Nachfolgeaufträge (Nachfolge-Schaltkennzeichen) verhindert ist. Um dies nun zu bewerkstelligen, ist eine Restriktionseinrichtung L vorgesehen. Überschreitet in dem Belastungszähler W der Zählwert den Schwellenwert, also den Vergleichswert, so gibt der Belastungszähler W ein Minderungssignal über die Leitung -v zur Restriktionseinrichtung L. Ist die Überschreitung des Schwellwertes durch den Zählwert wieder behoben, so gibt der Belastungszähler W ein Steigerungssignal +v zur Restriktionseinrichtung L hin ab. Die Abgabe eines Minderungssignales oder Steigerungssignales vom Belastungszähler W zur Restriktionseinrichtung L erfolgt in gleichmäßigen Zeitabständen von z. B. 1 Sekunde.

Die Restriktionseinrichtung L dient nun dazu, in den Anschlußgruppen LTG1 bis LTGn zu bewirken, daß hier ein bestimmter Prozentsatz von Verbindungsherstellungsversuchen abgewiesen wird. Dadurch soll die Menge der einfallenden Informationsverarbeitungsaufträge reduziert werden. Hierzu ist in jedem der dezentralen Schaltwerke GP ein Speicher Zi vorgesehen, in dem der Prozentsatz von Anrufsignalen gespeichert· ist, die bei einer Erkennung von Informationsverarbeitungs-Verkehrsüberlastungen zur Abwehr solcher Überlastungen abgewiesen werden sollen. In diesem Speicher sind z. B. die Prozentsätze 0 %, 25 %, 50 % und 75 % speicherbar. Diese Prozentsätze geben an, welcher Anteil der eintreffenden Anrufsignale abzuweisen ist. Unter Abweisung ist zu verstehen, daß bei Eintreffen eines Anrufsignales an den betreffenden Teilnehmer Besetztsignal ausgesendet wird, und daß verhindert wird, daß von ihm abgegebene Wahlkennzeichen aufgenommen werden. Ebensogut ist es auch möglich, anstelle eines Prozentsatzes für abzuweisende Anrufsignale auch einen Prozentsatz für anzunehmende Anrufsignale, also eine « Durchlaßquote » zu speichern. Die Abweisung von Anrufsignalen kann nach dem Abzählprinzip erfolgen, wobei also ein jeweils rufender Teilnehmer zufällig Erfolg oder Mißerfolg haben kann mit seinem Verbindungsherstellungsversuch, oder es kann auch unterschieden werden zwischen Anrufen oder Teilnehmern verschiedener Prioritätsklassen.

Daten über den jeweiligen Prozentsatz von abzuweisenden bzw. durchzulassenden Initialaufträgen werden von der Restriktionseinrichtung L zu den dezentralen Schaltwerken GP übertragen und in ihnen gespeichert. Eine solche Übertragung dieser Daten findet entweder laufend statt oder immer nur dann, wenn eine Erhöhung oder Herabsetzung dieses Prozentsatzes zu melden ist. Die in den dezentralen Schaltwerken durch die Speicherung des Prozentsatzes vorgesehenen Speicherschaltmittel Zi verringern bzw. vergrößern den gespeicherten Prozentsatz immer bei Eintreffen von eine Erhöhung bzw. eine Herabsetzung meldenden Daten schrittweise. Es ist nun vorgesehen, daß die der Meldung der Erhöhung bzw. Herabsetzung des Prozentsatzes dienenden Daten gemeinsam mit den der Abwicklung der Vermittlungsvorgänge vom zentralen Schaltwerk zu den dezentralen Schaltwerken übertragenen Daten, insbesondere den Einstell- und Steuerinformationen, vom zentralen Schaltwerk zu den dezentralen Schaltwerken und in diesen zu den Speicherschaltmittel Zi übertragen werden. Hierzu ist die Restriktionseinrichtung L mit dem zentralen Schaltwerk über die Leitung d verbunden. Sie meldet über diesen Weg Daten bezüglich des geltenden Prozentsatzes. Das zentrale Schaltwerk ZW gibt diese Daten, die jeweils Daten relativ geringen Informationsinhaltes sind, den der Abwicklung der Vermittlungsvorgänge dienenden Informationen bei, die also vom zentralen Schaltwerk zu den dezentralen Schaltwerken laufend übertragen werden. Es ist also nicht erforderlich, daß für die Übertragung der den jeweiligen Prozentsatz betreffenden Daten eigene Nachrichten-Transaktionen gestartet werden müssen, sondern diese Daten können den Informationsübertragungsvorgängen für die Verbindungsherstellung beigegeben werden. Da der Datenaustausch mit den verschiedenen Anschlußgruppen unterschiedlich intensiv ist, werden die den jeweiligen Prozentsatz meldenden Daten also besonders schnell zu denjenigen dezentralen Schaltwerken hin transportiert, die in einem besonders regen Datenaustausch mit dem zentralen Schaltwerk stehen. Dadurch, daß der erwähnte Prozentsatz in den dezentralen Schaltwerken gespeichert ist, ist es während der gesamten Dauer einer Lastabwehrphase gleich starker Lastabwehr nicht erforderlich, Daten zu übertragen, die die Informationsverarbeitungs-Verkehrsüberlastung betreffen. Treten Informationsverarbeitungs-Verkehrsüberlastungen von einer Anschlußgruppe her auf, so werden die betreffenden Restriktionsdaten zuerst zu dieser hin gemeldet.

Dadurch, daß die Abweisung von Initialaufträgen praktisch schon in den Anschlußgruppen durch die beschriebenen Restriktionsmaßnahmen erfolgt, ist es nicht mehr erforderlich, vom zentralen Schaltwerk her die angenommenen Initialaufträge zu den dezentralen Schaltwerken hin zu quittieren, denn durch die Verwendung eines gemeinsamen FiFo-Speichers für Initialaufträge und Nachfolgeaufträge kann der Fall nicht mehr eintreten, daß bei Überlastung des zentralen Schaltwerkes Nachfolgeaufträge bei ihm eintreffen, deren zugehörige Initialaufträge vom zentralen Schaltwerk noch nicht akzeptiert worden sind. Die Informationsverarbeitungsaufträge (Schaltkennzeichen) treffen in ihrer jeweiligen zeitlichen Folge also gemischt hinsichtlich verschiedener Serien (eine Serie entspricht immer einem Verbindungsherstellungsvorgang) aufeinanderfolgend ein ; sie zeigen ihre jeweilige Serienzugehörigkeit durch eine jedem Schaltkennzeichen beigegebene Ursprungsadresse an. Diese Ursprungsadresse gibt die jeweilige Zuordnung zu einem rufenden Teilnehmer oder einem Verbindungssatz oder dergleichen an.

Es ist vorgesehen, daß nach einer erfolgten Abwehr einer Informationsverarbeitungs-Verkehrsüberlastung bei einer Abnahme derselben und einem dabei stattfindenden ununterbrochenen Unterschreiten einer Belastungsdegressionsgrenze durch den Momentanwert der akuten Informations-Verkehrsbelastung nach Ablauf einer bestimmten Mindest-Karenzzeit, z. B. von 12 Sekunden, während der für das für die Belastbarkeit maßgebende Bestimmungsergebnis aufgrund des Rückganges der Belastung stets höhere Werte ermittelt werden, die Erzeugung und/oder Weitergabe und/oder Auswertung des Bestimmungsergebnisses — letztere durch Vergleich des Zählergebnisses — mit dem Bestimmungsergebnis — unterbrochen wird. Hierzu ist eine Indikationseinrichtung E vorgesehen. Diese ist über eine Leitung e mit dem Ausgang der Restriktionseinrichtung L verbunden ; ferner ist sie über die Leitung t1 mit der Zeitgebereinrichtung Zg verbunden. Wenn ununterbrochen eine längere Zeit, z. B. von 12 Sekunden, keine Informationsverarbeitungs-Verkehrsüberlastung vorgelegen hat, also die Belastungsdegressionsgrenze auch so lange ununterbrochen unterschritten ist, was sich daran zeigt, daß es für diese Zeit keine Restriktion gegeben hat, wird die Belastbarkeitsmessung deaktiviert. Dies kann in der Weise geschehen, daß die Auswertung des Bestimmungsergebnisses gestopt wird. Hierzu ist die Leitung w zwischen der Indikationseinrichtung E und dem Belastungszähler W vorgesehen. Zur Deaktivierung der Auswertung des Bestimmungsergebnisses wird ein entsprechendes Signal von der Indikationseinrichtung E zum Belastungszähler W gegeben. Die in einem stets wiederholten Vergleich jedes der Zählergebnisse des Belastungszählers W mit dem Bestimmungsergebnis liegende Auswertung des Bestimmungsergebnisses wird durch diese Deaktivierung beendet. Diese Deaktivierung kann aber auch darin bestehen, daß ein entsprechendes Signal zur Meßeinrichtung B übertragen wird, das hier die Erzeugung und/oder Weitergabe des Bestimmungsergebnisses unterbricht. Im Zusammenhang mit der Deaktivierung ist ferner vorgesehen, daß das zuletzt ermittelte und im Belastungszähler W gespeicherte Bestimmungsergebnis durch einen konstanten Mittelwert ersetzt wird. Während der Zeit längerer Unterbelastung wurde nämlich das in der Zähleinrichtung gespeicherte Bestimmungsergebnis zunächst ständig erhöht. Erfolgt dann die Deaktivierung, so wird das bis dahin gespeicherte Bestimmungsergebnis durch den konstanten Mittelwert ersetzt, damit das zentrale Schaltwerk bei einem plötzlich eintretenden Belastungssprung mit Informationsverarbeitungsaufträgen nicht völlig überschwemmt werden kann, bevor der Vergleichswert im Belastungszähler W entsprechend wieder heruntergeregelt worden ist. Es wird also das während der Zeit längerer Unterbelastung überhöhte Bestimmungsergebnis bzw. der ihm entsprechende, im Speicher S des Belastungszählers gespeicherte Vergleichswert durch einen Wert — nämlich den genannten konstanten Mittelwert —

ersetzt, der bei einem Wiedereinsetzen der Regelung eine Abwehr von Informationsverarbeitungs-Verkehrsüberlastungen wirksam einleitet bzw. vorbereitet. Führt also nach erfolgter Reaktivierung die Zählung der Initialaufträge und der Vergleich der betreffenden Zählergebnisse mit dem gespeicherten konstanten Mittelwert zur Feststellung der Überlastsituation, so wird die Auswertung des Bestimmungsergebnisses erneut wirksam geschaltet bzw. die Erzeugung und/oder Weitergabe des Bestimmungsergebnisses durch die Meßeinrichtung B.

Nach einer Deaktivierung der Belastbarkeitsmessung erfolgt also erneut deren Initialisierung. Dies kann durch zwei verschiedene Ursachen geschehen. Erreicht der Belastungszähler W, der ja nur die Initialaufträge zählt, erneut einen Wert, der gleich dem oder höher ist als der im Speicher S gespeicherte Vergleichswert oder erreicht oder überschreitet der Füllungsgrad des sowohl Initialaufträge als auch Nachfolgeaufträge speichernden FiFo-Speichers einen besimmten Grenzwert, so wird erneut die Auswertung des von der Meßeinrichtung B gelieferten Bestimmungsergebnisses gestartet. Der Zeitraum zwischen Initialisierung und Deaktivierung stellt eine Lastregulierphase dar ; in ihr befindet sich die aktuelle Informationsverarbeitungs-Arbeitsbelastung in einem den Vollast- und Überlastbereich umfassenden Lastregulierbereich.

Wie ausgeführt, ist die Initialisierung von zwei voneinander unabhängigen Werten abhängig. Einerseits führt der Belastungszähler W die Zählung der Initialaufträge und den Vergleich mit dem gespeicherten Vergleichswert durch ; andererseits wird mit einer Meßeinrichtung F der Füllungsgrad des FiFo-Speichers ermittelt, der sowohl Initialaufträge als auch Nachfolgeaufträge speichert. Wie ausgeführt, beruht die Initialisierung auf zwei voneinander unabhängigen Werten ; sie findet also statt, wenn die Zählung der Initialaufträge einen Festwert, nämlich den im Speicher S gespeicherten Vergleichswert erreicht oder überschreitet, findet aber auch statt, wenn der Füllungsgrad im FiFo-Speicher einen bestimmten zweiten Festwert überschreitet. Es ist also entsprechend dem Zählergebnis ein erster Festwert hinsichtlich der Überschreitung desselben durch die Initialaufträge festgelegt und ein zweiter Festwert entsprechend dem Füllungsgrad.

In dem zuletzt angesprochenen Zusammenhang ist vorgesehen, daß der im Speicher S gespeicherte Wert so hoch angesetzt ist, daß auch bei einer hohen, jedoch noch nicht eine Überlastung darstellenden Verkehrsbelastung eine in diesem Fall noch nicht erforderliche, ja sogar unerwünschte Initialisierung nur mit sehr geringer Wahrscheinlichkeit eintreten kann. Dies hat zur Folge, daß der Schwellenwert, der im Speicher S gespeichert ist, nur im Fall einer starken Überlastung, dann aber mit nur kurzer Verzögerungsfrist, eine Initialisierung verursacht. Der in der Meßeinrichtung F gespeicherte Festwert stellt dagegen — die Wirkung des im Speicher S gespeicherten wertes ergänzend — sicher, daß die Initialisierung auch im Fall einer nur geringen Überlastung erfolgt. Die Verzugszeit ist hierbei näherungsweise umgekehrt proportional dem Ausmaß der Überlastung und im allgemeinen größer als die der Auswirkung des im Speicher S gespeicherten Festwertes. Die in dem Speicher S und in der Meßeinrichtung F gespeicherten Werte ergänzen also einander in ihrer Wirkung, und zwar in der Weise, daß der im Speicher S gespeicherte Wert für ein möglichst rasches Erkennen von hoher Überlastung und der in der Meßeinrichtung F gespeicherte Wert für ein sicheres Erkennen auch von geringer Überlastung Sorge trägt.

## Patentansprüche

1. Schaltungsanordnung für Fernmeldevermittlungsanlagen, insbesondere Fernsprechvermittlungsanlagen, mit zentralen und dezentralen informationsverarbeitenden Schaltwerken, die eine hinsichtlich der Informationsverarbeitungskapazität begrenzte Leistungsfähigkeit aufweisen, und mit einem zentralen Koppelfeld (K) und mit dezentralen Anschlußgruppen (LTG), denen jeweils ein dezentrales Schaltwerk (GP), zugeordnet ist, und an die Teilnehmeranschlußleitungen, Verbindungsleitungen, z. B. Orts- und Fernverbindungsleitungen, und verbindungsindividuelle Schalteinrichtungen, z. B. Verbindungssätze und Wahlempfangseinrichtungen, angeschlossen sind, und die mit dem zentralen Schaltwerk (ZW) in einem der Abwicklung der einzelnen Vermittlungsvorgänge dienenden Austausch von Daten, z. B. von Wahlinformationen und Steuer- und Einstellinformationen, stehen, und mit Meßeinrichtungen (B, W) zur Bestimmung eines Abweichens der akuten Informationsverarbeitungs-Arbeitsbelastung eines zentralen Schaltwerkes von seiner Leistungsfähigkeit, insbesondere zur Erkennung von Informationsverarbeitungs-Verkehrsüberlastungen und zur Abwehr solcher Überlastungen, und mit peripheren Schalteinrichtungen, in denen die Menge der einfallenden Informationsverarbeitungs-Aufträge reduziert wird, indem ein bestimmter Prozentsatz dieser Aufträge abgewiesen wird, und mit Übertragungsschaltmitteln zur Meldung von Daten über das Abweichen der akuten Informationsverarbeitungs-Arbeitsbelastung bezüglich der Leistungsfähigkeit eines zentralen Schaltwerks zu den Schaltwerken, dadurch gekennzeichnet, daß in den dezentralen Schaltwerken (ZW) ein Prozentsatz abzuweisender Aufträge gespeichert ist, daß in den dezentralen Schaltwerken (GP, GP2, ... GPn) für die Speicherung des Prozentsatzes vorgesehene Speicherschaltmittel (Zi) bei Eintreffen von eine zulässige Belastungs-Erhöhung bzw. eine erforderliche Belastungs-Herabsetzung gegenüber der momentan herrschenden Belastung des zentralen Schaltwerkes (ZW) signalisierenden Daten schrittweise mit vorbestimmter Schrittweite den gespeicherten Prozentsatz verringern bzw.

vergrößern, und daß diese Daten gemeinsam mit den der Abwicklung der Vermittlungsvorgänge vom zentralen Schaltwerk (ZW) zu den dezentralen Schaltwerken (GP, GP2, ... GPn) übertragenen Daten, insbesondere mit den Einstell- und Steuerinformationen, vom zentralen Schaltwerk (ZW) zu den dezentralen Schaltwerken (GP, GP2, ... GPn) und in diesen zu den Speicherschaltmitteln (Zi) übertragen werden.

2. Schaltungsanordnung nach Anspruch 1, dadurch gekennzeichnet, daß die der Meldung der Erhöhung bzw. Herabsetzung dienenden Daten nur übertragen werden, wenn eine Eröhung oder Herabsetzung der Leistungsfähigkeit zu melden ist.

### Claims

1. A circuit arrangement for telecommunications exchange systems, in particular telephone exchange systems, comprising central and decentral information-processing switching units which have a call-handling capacity which is limited in respect of information processing capacity, and comprising a central switching network (K) and decentral terminal groups (LTG), each of which is assigned a decentral switching unit (GP) and to which subscriber lines, connection lines, for example local and trunk connection lines, and connection-individual switching devices, e. g. connection sets and dialling code reception devices, are connected and which exchange data, e. g. items of dialling information and control- and setting-up information, with the central switching unit (ZW) for the execution of the individual switching procedures, and comprising measuring devices (B, W) which serve to determine a deviation in the instantaneous information processing operating load of a central switching unit from its call-handing capacity, in particular which serve to recognise information processing traffic overloads and to avert such overloads, and comprising peripheral switching devices in which the quantity of incoming information processing jobs is reduced in that a specified percentage of said jobs are rejected, and comprising transmission switching means which serve to report to the switching units data relating to the deviation of the instantaneous information processing operating load relative to the call-handling capacity of a central switching unit, characterised in that the decentral switching units (ZW) store a percentage of jobs which are to be rejected, that on the arrival of data which signal a permissible load increase or a necessary load reduction relative to the instantaneously prevailing load of the central switching unit (ZW), storage switching means (Zi) provided in the decentral switching units (GP, GP2,... GPn) for the storage of the percentage reduce or increase respectively the stored percentage in steps of a predetermined step size, and that these data items, together with the data items transmitted from the central switching unit (ZW) to the decentral switching units (GP, GP2,...

GPn) for the execution of the switching procedures, in particular together with the setting-up and control information, are transmitted from the central switching unit (ZW) to the decentral switching units (GP, GP2,... GPn) and in the latter are transferred to the storage switching means (Zi).

2. A circuit arrangement as claimed in claim 1, characterised in that the data items which serve to report the increase or reduction of the stored percentage are transmitted only when an increase or reduction in the call-handling capacity is to be reported.

### Revendications

1. Montage pour des installations de télécommunications, notamment des centraux téléphoniques, comportant des unités de commutation centrales et décentralisées traitant les informations et qui possèdent une capacité potentielle limitée en ce qui concerne la capacité de traitement d'informations, et comportant un champ de couplage central (K) et des groupes décentralisés de raccordement (LTG), auxquels sont associées respectivement des unités de commutation décentralisées (GP), et auxquels des lignes d'abonnés, des lignes de jonction, par exemple des lignes urbaines et des lignes interurbaines et des dispositifs de commutation prévus individuellement par liaison, par exemple des jeux d'organes de jonction et des dispositifs de réception de sélection, sont raccordés, et qui réalisent avec l'unité centrale de commutation (SZW) un échange, utilisé pour l'exécution de différents processus de commutation, de données, par exemple d'informations de sélection et d'informations de commande et de réglage, et comportant des dispositifs de mesure (B, W) servant à déterminer l'écart de la charge intense de travail de traitement d'informations d'unités centrales de commande par rapport à sa capacité potentielle, notamment pour l'identification de surcharges du trafic de traitement d'informations et pour lutter contre de telles surcharges, et comportant des dispositifs périphériques de commutation, dans lesquels la quantité des ordres arrivants de traitement d'informations est réduite par le fait qu'un pourcentage déterminé de ces ordres est rejeté, et comportant des moyens de transmission servant à transmettre, aux unités de commutation, des données concernant l'écart de la charge intense en travail de traitement d'informations par rapport à la capacité potentielle d'une unité centrale de commutation, caractérisé par le fait qu'un pourcentage d'ordres devant être rejetés est mémorisé dans les unités décentralisées de commutation (ZW), que des moyens de commutation de mémoire (Zi), qui sont prévus dans les unités décentralisées de commutation (GP, GP2, ... GPn) pour la mémorisation du pourcentage, augmentent ou réduisent pas-à-pas le pourcentage mémorisé, avec une valeur en pas prédéterminée, lors de l'arrivée de données signalant un accroissement admissible de la charge ou une réduction nécessaire de la charge par rapport à la charge seulement présente de l'unité centrale de commutation (ZW), et que ces données sont transmises, en commun avec les données transmises lors de l'exécution des processus de commutation depuis l'unité centrale de commutation (ZW) aux unités décentralisées de commutation (GP, GP2, ... GPn), notamment avec les informations de réglage et de commande, de l'unité centrale de commutation (ZW) aux unités décentralisées de commutation (GP, GP2, ... GPn) et sont transmises, dans ces unités, aux moyens de commutation de mémoire (Zi).

2. Montage suivant la revendication 1, caractérisé par le fait que les données utilisées pour signaler l'accroissement ou la réduction ne sont transmises que lorsqu'un accroissement ou une réduction de la capacité potentielle doit être signalé.

FIG. 1

FIG. 2